# EUROPÄISCHE PATENTSCHRIFT

(11) **EP 0 694 681 B1**
(45) Veröffentlichungstag und Bekanntmachung des Hinweises auf die Patenterteilung: **16.12.1998**
(21) Anmeldenummer: 95108853.3
(22) Anmeldetag: 08.06.1995
(51) Int. Cl.: F01P 7/16, G05D 23/13

(54) **Thermostatventil für den Kühlmittelkreis einer Brennkraftmaschine**
Thermostatic valve for the coolant circuit of an internal combustion engine
Vanne thermostatique pour le circuit de refroidissement d'un moteur à combustion interne

(30) Priorität: 26.07.1994 DE 4426435
(43) Veröffentlichungstag der Anmeldung: 31.01.1996
(73) Patentinhaber: Bayerische Motoren Werke Aktiengesellschaft, 80788 München (DE); BEHR-THOMSON DEHNSTOFFREGLER GMBH & CO., D-70806 Kornwestheim (DE)
(72) Erfinder: Leu, Peter, Dipl.-Ing., D-73770 Denkendorf (DE); Saur, Roland, Dipl.-Ing., D-70195 Stuttgart (DE); Lemberger, Heinz, D-85774 Unterföhring (DE); Huemer, Gerhart, D-85591 Vaterstetten (DE)

(56) Entgegenhaltungen:
- DE-B- 2 755 462
- DE-U- 9 109 600
- FR-A- 2 601 719
- US-A- 3 092 322
- US-A- 4 344 564

## Beschreibung

Die Erfindung geht gemäß dem Oberbegriff des Patentanspruches 1 von der DE-B 2 755 466 aus.

Bei diesem bekannten Thermostatventil stehen das Hauptventil, das Kurzschlußventil und das Warmlaufventil über einen Stellmotor in gegenseitig fester Antriebsverbindung derart, daß bei geschlossenem Hauptventil im äußeren Umlauf des Kühlmittels über einen Wärmetauscher auch das Warmlaufventil einen Strömungsquerschnitt der Kurzschlußleitung des inneren Kühlmittelumlaufes sperrt. Eine räumlich neben dem Warmlaufventil vorgesehene Leckagebohrung dient einem Minimalumlauf über die Kurzschlußleitung. Mit dieser Anordnung ist eine verkürzte Warmlaufphase der Brennkraftmaschine nach einem Kaltstart erreicht mit z.B. abgasseitig reduzierter Schadstoffemission.

Aus der gattungsfremden FR-A 2 601 719 ist ein Thermostatventil bekannt, dessen mit dem Hauptventil antriebsfest verbundenes, plattenartig gestaltetes Kurzschlußventil mit Durchbrüchen versehen ist, die ein federbelastetes Tellerventil verschließt. Sobald dieses Kurzschlußventil die Kurzschlußleitung versperrt, wirkt diese Anordnung der ventilgesteuerten Durchbrüche als ein Druckbegrenzungsventil, das dem Abbau von aus stärkeren Lastwechseländerungen der Brennkraftmaschine mit schnellen Anstiegen der Wasserpumpenfördermengen resultierenden Drücken im Kühlmittelkreis dient.

Der Erfindung liegt die Aufgabe zugrunde, das gattungsgemäße Thermostatventil unter Beibehaltung eines einfachen Aufbaues um die Funktion eines Druckbegrenzungsventils zu erweitern.

Diese Aufgabe ist mit dem Patentanspruch 1 derart gelöst, daß das Warmlaufventil ein relativ zum Kurzschlußventil in öffnungs- und Schließrichtung freibeweglich angeordnetes Drosselventil ist, wobei das zusätzlich der Druckbegrenzung dienende Warmlaufventil mit einem vom Kurzschlußventil gesteuert verschließbaren Bypass als Kurzschluß-Strömungsquerschnitt ausgebildet ist.

Mit der erfindungsgemäßen Antriebsentkoppelung von Warmlaufventil und Kurzschlußventil ist in vorteilhaft einfacher Weise ein Druckbegrenzungsventil erreicht. Die weitere erfindungsgemäße Ausbildung des als Drosselventil gestalteten Warmlaufventils mit einem einen Kurzschluß-Strömungsquerschnitt bildenden Bypass stellt in vorteilhafter einfacher Bauweise einen temperaturgesteuerten, reduzierten Kurzschlußumlauf sicher. Ein besonderer Vorteil des erfindungsgemäßen Bypasses ist, daß dieser auch als eine erste Druckspitzen abbauende Dämpfungsdrossel gewählt werden kann.

In Ausgestaltung des Thermostatventils nach Anspruch 1 mit einem Dehnstoffelement als Stellmotor für Haupt- und Kurzschlußventil ist im Anspruch 2 eine im Aufbau einfache Anordnung von Kurzschlußventil und Warmlaufventil beschrieben. Eine vorteilhafte Weiterbildung dieser Anordnung beschreibt Anspruch 3, wobei das in seinem Hub-Endabschnitt in eine napfartige Vertiefung im Warmlaufventil mit Spiel eintauchende Kurzschlußventil zum einen eine fortschreitende Reduzierung der Kurzschlußströmung bewirkt, und zum anderen mit der Vertiefung eine Dämpfungskammer bildet zum Abbau von Druckspitzen bei einer Druckbegrenzung.

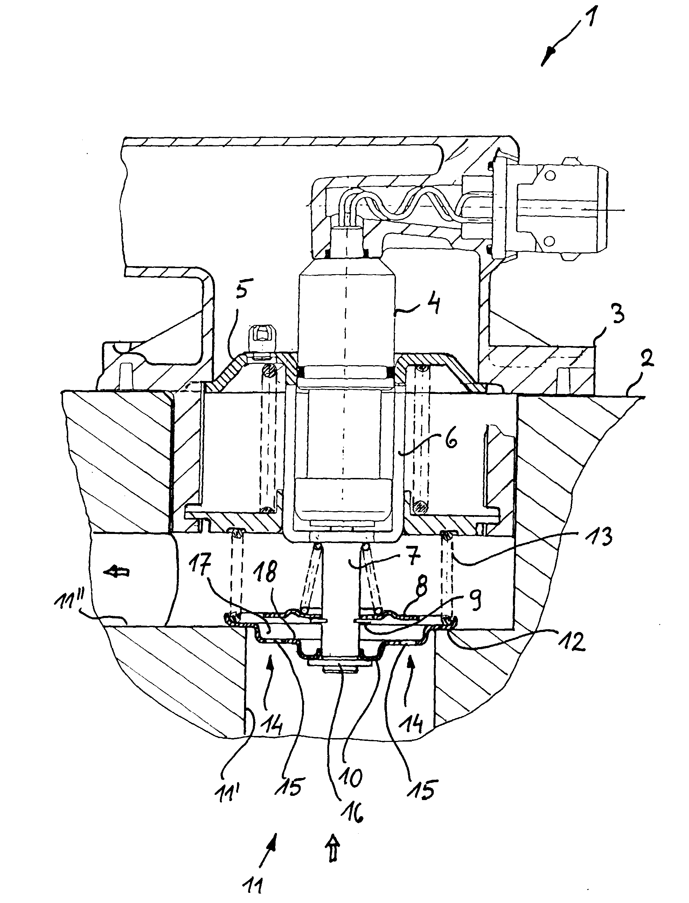

Die Erfindung ist anhand eines in der Zeichnung dargestellten Ausführungsbeispiels beschrieben.

Die einzige Figur zeigt ein Thermostatventil 1 für den Kühlmittelkreis einer nicht näher gezeigten Brennkraftmaschine 2. Das Thermostatventil 1 mit in einem als Deckel gestalteten Einsatz 3 angeordneten Dehnstoffelement 4 umfaßt ein Hauptventil 5, das der Steuerung/Regelung eines äußeren, über einen nicht gezeigten Wärmetauscher geführten Kühlmittelumlaufes dient. Hauptventil 5 und Dehnstoffelement 4 wirken über eine Antriebsverbindung 6 zusammen, die mit einem Fortsatz 7 ausgerüstet ist. Der Fortsatz 7 trägt ein schiebebeweglich angeordnetes Kurzschlußventil 8, das unter federelastisch abgestützter Anlage gegen einen Anschlag 9 am Fortsatz 7 mit dem Hauptventil 5 in Antriebsverbindung steht.

Weiter trägt der Fortsatz 7 in seinem freien Endbereich ein schiebebeweglich angeordnetes Warmlaufventil 10, das in einer Kurzschlußleitung 11 eines inneren Kühlmittelumlaufes zwischen einem Zulauf-Abschnitt 11' und einem Ablauf-Abschnitt 11" angeordnet ist. Das Warmlaufventil 10 wirkt mit einem dem Zulauf-Abschnitt 11' zugeordneten Dichtsitz 12 zusammen, wobei eine gesonderte Schließfeder 13 das Warmlaufventil 10 beaufschlagt.

Wie die Figur weiter zeigt, ist das den Zulauf-Abschnitt 11' der Kurzschlußleitung 11 versperrend angeordnete Warmlaufventil 10 mittels eines Bypasses 14 als Drosselventil der Kurzschlußströmung gestaltet und relativ zum Kurzschlußventil 8 auf dem Fortsatz 7 in öffnungs- und Schließrichtung freibeweglich angeordnet. Das erfindungsgemäße Warmlaufventil 10 kann damit in vorteilhafter Weise dem Abbau von aus stärkeren Lastwechseländerungen der Brennkraftmaschine mit schnellen Anstiegen der Wasserpumpenfördermengen resultierenden Drücken im Kühlmittelkreis dienen. Dabei kann der Bypass 14 zusätzlich als eine erste Druckspitzen abbauende Dämpfungsdrossel wirken.

Weiter weist das Warmlaufventil 10 in Abstimmung mit seiner Warmlauffunktion einen Bypass 14 mit entsprechend gewählten Kurzschluß-Strömungsquerschnitten 15 auf. Diese Strömungsquerschnitte 15 sind von dem mit dem Hauptventil 5 in Antriebskoppelung stehenden Kurzschlußventil 8 verschließbar, das von dem auf dem Dichtsitz 12 aufliegenden Warmlaufventil 10 um ein vorbestimmtes Maß des Öffnungshubes des Hauptventiles 5 entfernt auf dem Fortsatz 7 angeordnet ist. Diese Anordnung bewirkt, daß mit zunehmender Öffnung des Hauptventiles 5 aufgrund einer der Regeltemperatur des Dehnstoffelementes 4 sich nähernder Kühlmitteltemperatur das mit dem Hauptventil 5 mitbewegte Kurzschlußventil 8 diese Strömungsquerschnitte 15 verschließt zur Unterbindung einer Kurzschlußströmung in der Kurzschlußleitung 11.

Die weiter vorne beschriebene, mittels elastischer Abstützung schiebebewegliche Anordnung des Kurzschlußventiles 8 auf dem Fortsatz 7 der Antriebsverbindung 6 zwischen Dehnstoffelement 4 und Hauptventil 5 stellt ferner sicher, daß das vom Dichtsitz 12 bei einer Druckbegrenzung abhebende Warmlaufventil 10 das nah benachbarte Kurzschlußventil 8 mitnehmen kann und somit eine Begrenzung einer druckabhängigen Öffnungsbewegung des Warmlaufventiles 10 vermieden ist.

In vorteilhafter Ausgestaltung ist das mittels eines Anschlages 16 auf dem Fortsatz 7 gesichert gehaltene Warmlaufventil 10 als ein scheibenartiges Plattenventil mit einer napfartigen Vertiefung 17 gestaltet, in deren Stirnwand 18 die den Bypass 14 bildenden Kurzschluß-Strömungsquerschnitte 15 angeordnet sind. In diese napfartige Vertiefung 17 taucht das als Tellerventil gestaltete Kurzschlußventil 8 gegen sein Hubende ein, womit zum einen eine fortschreitende Reduzierung der Kurzschlußströmung bei öffnendem Hauptventil 5 erreicht ist; zum anderen bilden die Vertiefung 17 und das mit Umfangsspiel eingetauchte Kurzschlußventil 8 eine zum Abbau von Druckspitzen während einer Druckbegrenzung wirksame Dämpfungskammer gegen Schwingungen des Warmlaufventiles 10.

## Patentansprüche

1. Thermostatventil eines Kühlmittelkreises einer Brennkraftmaschine,
- umfassend ein einen äußeren Kühlmittelumlauf steuerndes/regelndes Hauptventil (5),
- ein über den Öffnungshub des Hauptventiles gesteuert einen Strömungsquerschnitt (15) eines inneren Kühlmittelumlaufes verschließendes Kurzschlußventil (8), sowie
- ein in der Kurzschlußleitung (11) zusätzlich angeordnetes Warmlaufventil (10),
dadurch gekennzeichnet,
- daß das Warmlaufventil (10) ein relativ zum Kurzschlußventil (8) in öffnungs- und Schließrichtung freibeweglich angeordnetes Drosselventil ist, wobei
- das zusätzlich der Druckbegrenzung dienende Warmlaufventil (10) mit einem vom Kurzschlußventil (8) gesteuert verschließbaren Bypass (14) als Kurzschluß-Strömungsquerschnitt (15) ausgebildet ist.

2. Thermostatventil nach Anspruch 1,
- mit in einem Einsatz (3) angeordnetem Dehnstoffelement (4),
dadurch gekennzeichnet,
- daß eine Antriebsverbindung (6) des Dehnstoffelementes (4) mit dem Hauptventil (5) einen der schiebebeweglichen Führung von Warmlaufventil (10) und Kurzschlußventil (8) dienenden Fortsatz (7) aufweist, der
- einen ersten Anschlag (9) für das gegen die Antriebsverbindung (6) elastisch abgestützte Kurzschlußventil (8) trägt sowie
- einen zweiten Anschlag (16) für das vom Kurzschlußventil (8) um ein Maß des Öffnungshubes des Hauptventiles (5) beabstandet angeordnete Warmlaufventil (10), das
- von einer gesonderten Schließfeder (13) beaufschlagt ist.

3. Thermostatventil nach Anspruch 1 und 2, dadurch gekennzeichnet,
- daß das Warmlaufventil (10) als ein im wesentlichen scheibenartiges Plattenventil gestaltet ist mit einer napfartigen, das als Tellerventil ausgebildete Kurzschlußventil (8) in seinem Hub-Endabschnitt aufnehmenden Vertiefung (17), die
- in einer Stirnwand (18) einen Bypass (14) mit mehreren Kurzschluß-Strömungsquerschnitten (15) aufweist.

## Claims

1. A thermostat valve in a cooling circuit of an internal combustion engine,
- comprising a main valve (5) controlling an external coolant circuit in an open or closed loop,
- a short-circuit valve (8) controlled by the opening stroke of the main valve and closing a flow cross-section (15) of an inner coolant circuit, and
- a warming-up valve (10) additionally disposed in the short-circuit line (11),
characterised in that
- the warming-up valve (10) is a throttle valve disposed so as to be freely movable in the opening and closing direction relative to the short-circuit valve (8), wherein
- the warming-up valve (10) which additionally serves for pressure limitation, is formed with a short-circuit flow cross-section (15) in the form of a bypass (14) closable in controlled manner by the short-circuit valve (8).

2. A thermostat valve according to claim 1,
- comprising an expandable-material element (4) disposed in an insert (3),
characterised in that
- a drive connection (6) between the expandable-material element (4) and the main valve (5) comprises a projection (7) for sliding and guiding the warming-up valve (10) and short-circuit valve (8) and
- the projection has a first abutment (9) for the short-circuit valve (8), which is resiliently braced against the drive connection (6) and
- a second abutment (16) for the warming-up valve (10), which is disposed at a distance from the short-circuit valve (8) equal to a measure of the opening stroke of the main valve (5),
- the warming-up valve being acted upon by a separate closing spring (13).

3. A thermostat valve according to claims 1 and 2, characterised in that
- the warming-up valve (10) is a substantially disc-shaped plate valve formed with a cup-shaped recess (17) which receives the short-circuit valve (8), constructed as a mushroom valve, in the end portion of its stroke and
- has an end wall (18) containing a bypass (14) having a number of short-circuit flow cross-sections (15).

## Revendications

1. Vanne thermostatique d'un circuit d'agent de refroidissement d'un moteur à combustion interne, comprenant:
- une vanne principale (5), qui commande et/ou règle une circulation extérieure d'agent de refroidissement,
- une vanne de court-circuit (8)qui, en étant commandée au moyen de la course d'ouverture de la vanne principale, ferme une section transversale d'écoulement (15) de la circulation intérieure de l'agent de refroidissement , et
- une vanne d'échauffement (10), disposée en plus dans la conduite de court-circuit (11),
caractérisée en ce que
- la vanne d'échauffement (10) est une vanne d'étranglement qui est disposée de façon à se délacer librement par rapport à la vanne de court-circuit(8) dans le sens de l'ouverture et dans le sens de la fermeture, alors que
- la vanne d'échauffement (10), qui sert en plus à la limitation de la pression, est pourvue d'une dérivation (14), se présentant sous la forme d'une section transversale d'écoulement (15) de court-circuit, dérivation (14) qui peut être fermée par la vanne de court-circuit (8).

2. Vanne thermostatique selon la revendication 1, - avec un élément (4) en une matière extensible, qui est disposé dans un insert (3),
caractérisé en ce que
- une liaison d'entraînement (6) de l'élément (4) en une matière extensible présente avec la vanne principale (5) un prolongement (7) qui sert au guidage coulissant de la vanne d'échauffement (10) et de la vanne de court-circuit (8), prolongement (7) qui porte une première butée (9) pour la vanne de court-circuit (8), mise élastiquement en appui contre la liaison d'entraînement (6), et
- une deuxième butée (16) pour la vanne d'échauffement (10), disposée à une certaine distance de la vanne de court-circuit (8) qui correspond à une mesure de la course d'ouverture de la vanne principale (5),
- vanne d'échauffement (10) qui est sollicitée par un ressort séparé de fermeture.

3. Vanne thermostatique selon les revendications 1 et 2,
caractérisée en ce que
la vanne d'échauffement (10) se présente comme une vanne ayant sensiblement la forme d'un disque, avec un renfoncement (17) en forme de godet, recueillant la vanne de court-circuit (8), constituée comme une soupape en champignon, dans la section terminale de sa course, renfoncement (17) qui présente dans une paroi frontale (18) une dérivation (14) avec plusieurs sections d'écoulement de court-circuit (15).
